(19) Europäisches Patentamt
European Patent Office
Office européen des brevets

(11) Veröffentlichungsnummer: **0 418 609 A2**

(12) # EUROPÄISCHE PATENTANMELDUNG

(21) Anmeldenummer: **90116617.3**

(51) Int. Cl.5: **C08G 65/44**

(22) Anmeldetag: **30.08.90**

(30) Priorität: **20.09.89 DE 3931332**

(43) Veröffentlichungstag der Anmeldung:
**27.03.91 Patentblatt 91/13**

(84) Benannte Vertragsstaaten:
**AT BE DE FR GB IT NL**

(71) Anmelder: **HÜLS AKTIENGESELLSCHAFT**
**Paul-Baumann-Strasse 1 Postfach 1320**
**W-4370 Marl 1(DE)**

(72) Erfinder: **Kowalczik, Udo, Dr.**
**Am Nordbad 106**
**W-4630 Bochum 1(DE)**
Erfinder: **Neugebauer, Wolfgang, Dr.**
**Karl-Leisner-Strasse 3**
**W-4408 Dülmen(DE)**
Erfinder: **Bartmann, Martin, Dr.**
**Elper Weg 64**
**W-4350 Recklinghausen(DE)**

(54) **Thermoplastische Formmassen auf Basis modifizierter Polyphenylenether.**

(57)

2.1. Aufgabe der Erfindung war die Bereitstellung von Formmassen auf Basis modifizierter Polyphenylenether mit verbesserten mechanischen Eigenschaften wie z. B. Schlagzähigkeit.

2.2. Die Aufgabe wird durch Formmassen gelöst, die Polyphenylenether enthalten, welche unter Verwendung von Phenolen als Comonomeren hergestellt wurden, die Benzylgruppen als Substituenten tragen.

2.3. Die Formmassen werden zur Herstellung technischer Artikel wie z. B. Rohre, Platten oder Gehäuse verwendet.

EP 0 418 609 A2

# THERMOPLASTISCHE FORMMASSEN AUF BASIS MODIFIZIERTER POLYPHENYLENETHER

Die vorliegende Erfindung beschreibt thermoplastische Formmassen mit verbesserten mechanischen Eigenschaften auf Basis modifizierter Polyphenylenether.

Polyphenylenether (PPE) sind technische Hochleistungsthermoplaste mit hohen Schmelzviskositäten und Erweichungspunkten. Sie kommen vor allem dort zum Einsatz, wo es auf Beständigkeit bei hohen Temperaturen ankommt (vgl. US-PSS 3 306 874, 3 306 875, 3 257 357 und 3 257 358). Formteile aus reinen Polyphenylenethern sind allerdings wegen ihrer schlechten Schlagzähigkeit spröde und die Lösemittelbeständigkeit ist unbefriedigend; daher setzt man üblicherweise Mischungen aus Polyphenylenethern mit anderen Thermoplasten ein.

Die DE-0S 35 18 277 beschreibt z. B. thermoplastische Formmassen auf der Basis von Polyphenylenether und Polyoctenylen, welche sich durch hohe Schlagzähigkeit, hervorragende Wärmeformbeständigkeit und gute Verarbeitbarkeit auszeichnen.

Im Gegensatz zu diesen und ähnlichen Legierungen mit amorpher Matrix weisen Abmischungen mit Polyamiden eine sehr gute Lösemittelbeständigkeit auf; in der Regel werden allerdings spröde Produkte erhalten, da die beiden Komponenten unverträglich sind (DE-OSS 16 94 290 und 30 27 104). In der EP-OS 0 024 120 wird versucht, durch Zugabe einer dritten Komponente, wie einem flüssigen Dienpolymer, einem Epoxid oder einer Verbindung mit einer Doppel-oder Dreifachbindung und einer funktionellen Gruppe, eine gewisse Verträglichkeit herzustellen. Die Zähigkeit der erhaltenen Harzmassen reicht aber für viele Anwendungen nicht aus. Eine bessere Verträglichkeit der beiden Phasen wird durch eine Funktionalisierung des Polyphenylenethers z. B. mit Maleinsäureanhydrid, ggf. zusammen mit weiteren synergistisch wirkenden Substanzen, erzielt (siehe z. B. EP-OS 0 232 363, DE-OS 36 15 393, DE-OS 36 21 805 sowie JP-OS 84/66 452). Wegen der Flüchtigkeit und Toxizität von Ma leinsäureanhydrid sind hierbei umfangreiche Schutzvorrichtungen nötig, um Gefährdung bzw. Belästigung des Personals weitgehend auszuschließen.

Ein weiterer Ansatzpunkt zum Erzielen einer Verträglichkeit zwischen Polyphenylenether und anderen Polymeren besteht darin, daß man in den Polyphenylenether schon im Stadium der oxidativen Kupplung durch Zusatz geeigneter funktionalisierter Comonomerer reaktive Stellen einbaut, die beim Mischen mit den anderen Polymeren mit diesen reagieren können.

Beispielsweise wird in der US-PS 4 129 555 bei der Herstellung von Polyphenylenether ein substituiertes Aminomethylphenol mit eingesetzt. Die eingebauten Aminomethylgruppen sollen bewirken, daß Blends dieses Polyphenylenethers mit Polystyrolharzen eine bessere Schlagzähigkeit aufweisen.

In der EP-OS 0 338 209 wird gezeigt, daß ein Polyphenylenether mit endständigen funktionellen Gruppen wie Oxazolinyl, Amid, Ester, Imid oder Carbonyl eine gute Verträglichkeit mit Polyamiden aufweist. Als Grund dafür kann die Reaktion der funktionellen Gruppen mit Polyamid-Endgruppen angenommen werden.

Ein Nachteil dieser bisher bekannten Polyphenylenether-Copolymeren ist jedoch, daß sie nur einer begrenzten Auswahl von Blendkomponenten gegenüber wirksam sind. Zudem sind die benötigten Comonomeren teilweise schwer zugänglich.

Aus den US-PSS 3 306 874 und 3 306 875 sowie der DE-OS 29 17 819 ist die Herstellung von modifizierten Polyphenylenethern durch Copolykondensation von z. B. 2,6-Dimethylphenol mit 2-Methyl-6-alkylphenolen bekannt. Der Fachmann entnimmt weder dieser Schrift noch dem Stand der Technik Hinweise darauf, daß die daraus hergestellten Formmassen irgendwelche Vorteile gegenüber den vorbekannten Formmassen auf Basis gebräuchlicher Polyphenylenether besitzen könnten.

Es wurde nun überraschend aufgefunden, daß thermoplastische Formmassen, welche bestimmte modifizierte Polyphenylenether enthalten, deutlich bessere mechanische Eigenschaften aufweisen als Formmassen auf Basis unmodifizierter Polyphenylenether.

Die modifizierten Polyphenylenether werden dargestellt durch oxidative Kupplung von Phenolen der allgemeinen Formel I,

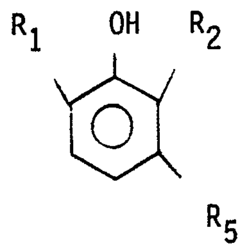

I

wobei $R_1$ und $R_2$ gleich Alkyl mit 1 bis 6 C-Atomen oder Phenyl beziehungsweise $R_1$ gleich tert.-Butyl und $R_2$ gleich H sowie $R_5$ gleich Alkyl mit 1 bis 6 C-Atomen oder bevorzugt H ist, mit Comonomeren der allgemeinen Formel II,

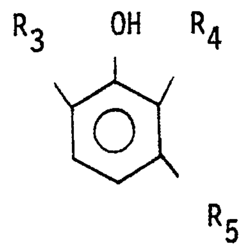

II

wobei $R_3$ gleich $R_1$ oder ggf. substituiertes Benzyl und $R_4$ gleich ggf. substituiertes Benzyl ist und die ggf. substituierte Benzylgruppe 7 bis 12 C-Atome besitzt.

Als Phenol der Formel I sind 2,3,6-Trimethylphenol und besonders 2,6-Dimethylphenol bevorzugt; geeignete Phenole der Formel II sind vor allem 2-Benzyl-6-methylphenol sowie 2,6-Dibenzylphenol. Diese können auf einfache Weise nach bekannten Methoden hergestellt werden, etwa durch Alkylierung von Phenolen mit Benzylalkohol in der Gasphase mit einem Festbett-Katalysator, z. B. entsprechend den DE-OSS 21 36 602 oder 24 28 056 bzw. der EP-OS 0 019 476.

Bevorzugt werden hierbei 99,8 bis 80 Mol-% der Phenole I und 0,2 bis 20 Mol-% der Phenole II eingesetzt.

Der modifizierte Polyphenylenether weist eine Viskositätszahl J, gemessen nach DIN 53 728 bei 25 °C in Chloroform (Konzentration 5 g/l) vorzugsweise im Bereich von 20 - 80 $cm^3/g$ auf, wobei die Darstellung dieser Polyphenylenether nach jedem dem Stand der Technik entsprechenden Verfahren durchgeführt werden kann. Üblicherweise erfolgt diese durch Oxidation des Phenolgemisches mit einem Sauerstoff enthaltenden Gas, wie z. B. Luft, in Gegenwart eines Kupfer-Amin-Katalysators (vgl. DE-OS 32 24 692, DE-OS 32 24 691, US-PS 3 306 874 und US-PS 3 306 875).

Die Abmischungen dieser modifizierten Polyphenylenether mit anderen Polymeren zu thermoplastischen Formmassen führt zu Produkten mit deutlich besseren mechanischen Eigenschaften als vergleichbare mit unmodifizierten Polyphenylenethern hergestellte Formmassen.

Verbesserte mechanische Eigenschaften werden vor allem bei folgenden Abmischungen erhalten:

I. Modifizierte Polyphenylenether mit Polymeren, welche die Schlagzähigkeit verbessern, wie z. B. schlagzähem Polystyrol, Styrol-Butadien-Kautschuk (statistische, verschmierte und Blockcopolymere, auch hydriert), Ethylen-Propylen-Copolymere, Ethylen-Propylen-Dien-Terpolymere, Polypentenylen, Polyoctenylen oder Mischungen daraus. Der Schlagzähmacher kann dem Stand der Technik entsprechend funktionalisiert sein (siehe etwa die US-PSS 3 236 917, 3 862 265, 3 873 643, 3 882 194 und 4 026 967 sowie die DE-OSS 22 16 718, 24 01 149 und 21 08 749), z. B. durch Umsetzung mit Maleinsäureanhydrid oder Fumarsäureestern. Derartige Formmassen können darüber hinaus auch glasklares Polystyrol enthalten.

II. Die erfindungsgemäß modifizierten Polyphenylenether ergeben zusammen mit Polyamiden Produkte, welche im Vergleich mit denen auf Basis unmodifizierter Polyphenylenether ebenfalls deutlich bessere mechanische Eigenschaften aufweisen.

Als Polyamide kommen Homo- und Copolymere in Frage, die vorzugsweise ausschließlich aliphatischer Struktur sind. Insbesondere seien hier die 6-, 46-, 66-, 612-, 1010-, 1012-, 11-, 12- und 1212-Polyamide aufgeführt. Die Kennzeichnung der Polyamide entspricht internationaler Norm, wobei die erste(n) Ziffer(n) die C-Atomzahl des Ausgangsamins und die letzte(n) Ziffer(n) die C-Atomzahl der Dicarbonsäure angeben. Wird nur eine Zahl angegeben, so bedeutet dies, daß von einer Aminocarbonsäure bzw. deren

Lactam ausgegangen wird (H. Domininghaus, "Die Kunststoffe und ihre Eigenschaften", VDI Verlag, 1976, Seite 272). Geeignet sind aber auch gemischte aliphatisch-aromatische Copolyamide (vgl. US-PSS 2 071 250, 2 071 251, 2 130 523, 2 130 948, 2 241 322, 2 312 966, 2 512 606, 3 393 210; Kirk-Othmer, Encyclopedia of chemical technology, Vol. 18, John Wiley & sons (1982), Seiten 328 und 435). Das Zahlenmittel des Molekulargewichts der Polyamide sollte über 5 000, vorzugsweise über 10 000, liegen.

Selbstverständlich können zusätzlich weitere Komponenten eingesetzt werden wie z. B. Schlagzähmacher, die bevorzugt dem Stand der Technik entsprechend funktionalisiert sind, beispielsweise mit Maleinsäureanhydrid oder Fumarsäureestern.

Die mechanischen Eigenschaften können darüber hinaus noch weiter verbessert werden, wenn zusätzlich zu den Phenolen I und II noch funktionalisierte Phenole, wie sie z. B. in der EP-OS 0 338 209 sowie den unveröffentlichten deutschen Patentanmeldungen P 39 10 825.2 und P 39 10 832.5 beschrieben sind, bei der oxidativen Kupplung mit eingebaut werden.

III. Bei der Funktionalisierung der erfindungsgemäß modifizierten Polyphenylenether nach bekannten Methoden (zusätzlich zu den bereits genannten Schriften siehe z. B. auch WO 85/05 372, WO 86/02 086 sowie die nicht veröffentlichte deutsche Patentanmeldung P 38 34 912.4), z. B. mit Maleinsäureanhydrid, und anschließendem Abmischen mit Polyamiden werden Formmassen erhalten, die in ihren mechanischen Eigenschaften denen auf Basis unmodifizierter Polyphenylenether überlegen sind. Offensichtlich wird die Funktionalisierung durch die eingebauten Comonomeren II erleichtert.

IV. Man kann natürlich auch einen funktionalisierten Schlagzähmacher (siehe unter I.) mit dem modifizierten Polyphenylenether mischen und die erhaltene Massen dann mit einem Polyamid mischen, obgleich dieser Weg weniger bevorzugt ist.

V. Vorteilhafter als unter IV. beschrieben mischt man einen modifizierten Polyphenylenether mit einem Schlagzähmacher wie unter I., funktionalisiert das Gemisch auf bekannte Weise, z. B. mit Maleinsäureanhydrid, ggf. zusammen mit weiteren synergistisch wirkenden Substanzen, und mischt anschließend mit Polyamid.

Die Vereinigung der modifizierten Polyphenylenether mit den anderen Polymeren kann nach allen Methoden des Standes der Technik erfolgen. Man kann entweder über Lösungen mischen, wobei anschließend einkonzentriert und unter Entgasungsbedingungen extrudiert wird; in der Regel jedoch erfolgt die Vereinigung der modifizierten Polyphenylenether mit den anderen Polaren ausgehend von einer Trockenmischung in einem gut knetenden Agreggat, z. B. einem Doppelschneckenextruder, bei Temperaturen von etwa 250 bis 350 °C, vorzugsweise 260 bis 310 °C. In den Fällen, in denen mehrfach hintereinander zugemischt werden muß (siehe z. B. III. bis V.), kann man entweder eine Vorformmasse herstellen, die dann weiter abgemischt wird, oder bevorzugt in einer einstufigen Arbeitsweise die weiteren Polymeren über eine Zwischendosierung in die Schmelze der Vormischung eingeben.

Die erfindungsgemäßen thermoplastischen Massen können daneben einen Flammschutz sowie weitere Zusatzstoffe, wie Pigmente, Oligo- und Polymere, Antistatika, Stabilisatoren und Verarbeitungshilfsmittel sowie Verstärkungsmittel, enthalten. Der Anteil der Verstärkungsmittel kann bis zu 50 %, der der Flammschutzmittel bis zu 15 % und der aller übrigen Zusatzstoffe insgesamt bis zu 5 %, jeweils bezogen auf die gesamte Formmasse, betragen.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. Infrage kommen dabei Halogen enthaltende organische Verbindungen, wie sie z. B. in der Monographie von H. Vogel "Flammfestmachen von Kunststoff", Hüthig-Verlag, 1966, auf den Seiten 94 bis 102 beschrieben werden. Es kann sich dabei aber auch um halogenierte Polymere, wie z. B. halogenierte Polyphenylenether (siehe DE-OS 33 34 068) oder bromierte Oligo- bzw. Polystyrole, handeln. Die Verbindungen sollen mehr als 30 Gewichtsprozent Halogen enthalten.

Im Falle des Einsatzes von halogenhaltigen Flammschutzmitteln empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Verstärkungsmittel eignen sich insbesondere Glas- und Kohlenstoffasern.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Die erhaltenen Formmassen lassen sich mit den für die Thermoplastverarbeitung üblichen Verfahren, wie z. B. Spritzgießen und Extrusion, zu Formkörpern verarbeiten.

Beispiele für technische Anwendungsgebiete sind Rohre, Platten, Gehäuse und sonstige technische Artikel für den Automobil-, Elektro- und Feinwerksektor.

Die erfindungsgemäßen Formmassen zeichnen sich gegenüber den Produkten des Standes der Technik durch eine hohe Zähigkeit bei guter Wärmeformbeständigkeit aus.

Die Viskositätszahl (J) des Polyphenylenethers wurde nach DIN 53 728 bei 25 °C in Chloroform (Konzentration 5 g/l) in $cm^3/g$ gemessen.

Die relative Viskosität $Eta_{rel}$ des Polyamids wurde mit einem Ubbelohde-Viskosimeter bei 25 °C in m-Kresol (Konzentration 5 g/l) bestimmt.

Die Reißdehnung (Epsilon $_R$) wurde nach DIN 53 455 an bei 290 °C gespritzten Schulterstäben bestimmt.

Zur Messung der Kerbschlagzähigkeit $a_k$ nach DIN 53 453 bei 23 °C wurden bei 290 °C gespritzte Normkleinstäbe mit Rechteckkerbe verwendet.

## 1. Herstellung von modifizierten Polyphenylenethern

### Beispiel 1.1

Eine Lösung von 18,0 kg 2,6-Dimethylphenol (99 Mol-%) und 0,408 kg 2,6-Dibenzylphenol (1 Mol-%) in 18 kg Toluol werden unter Luftbegasung innerhalb von 30 Minuten in eine gerührte, auf 30 °C thermostatisierte Mischung aus 156,0 kg Toluol, 23,64 kg Methanol, 3,6 kg Di-n-butylamin, 182,4 g $CuCl_2 \cdot 2H_2O$ und 182,4 g N,N′-Di-tert.-butylethylendiamin gegeben. Man läßt 70 Minuten reagieren und stoppt die Reaktion durch Zusatz von 51 l Wasser und 996 g Ethylendiamin-N,N,N′,N′-tetraessigsäure-Dinatriumsalz.

Nach erfolgter Phasentrennung und zweimaliger Wäsche bei 80 °C, jeweils mit einer Mischung aus 60 l Wasser und 180 g Triethanolamin, wird das Produkt mit 200 kg Methanol gefällt, zweimal mit je 100 kg Methanol gewaschen und anschließend getrocknet.
Ausbeute : 16,8 kg
J-Wert : 52 $cm^3/g$

### Beispiel 1.2

Analog 1.1 mit einer Mischung aus 18 kg 2,6-Dimethylphenol (95 Mol-%) und 2,128 kg 2,6-Dibenzylphenol (5 Mol-%) in 18 kg Toluol.
Ausbeute: 16,6 kg
J-Wert : 53 $cm^3/g$

### Beispiel 1.3

Analog 1.1 mit einer Mischung aus 15 kg 2,6-Dimethylphenol (90 Mol-%) und 3,743 kg 2,6-Dibenzylphenol (10 Mol-%) in 15 kg Toluol.
25 Ausbeute: 16,4 kg
J-Wert : 49 $cm^3/g$

### Beispiel 1.4

30 kg 2,6-Dimethylphenol (99 Mol-%) und 0,493 kg 2-Benzyl-6-methylphenol (1 Mol-%) in 30 kg Toluol werden unter Luftbegasung innerhalb von 30 Minuten in eine gerührte Mischung aus 260 kg Toluol, 42,0 kg Methanol, 6,0 kg Morpholin, 153 g $CuCl_2 \cdot 2H_2O$ (gelöst in 850 g Methanol) sowie 153 g N,N′-Di-tert.-butylethylendiamin gegeben. Nach einer Reaktionszeit von 135 Minuten wird die Reaktion durch Zugabe einer Mischung aus 75 kg Wasser, 9 kg Methanol sowie 300 g Triethanolamin und Durchleiten von $CO_2$ gestoppt. Die Wäsche der organischen Phase erfolgt zweimal mit jeweils 125 kg Wasser und 300 g Triethanolamin bei 80 °C. Das Produkt wird mit 350 kg Methanol gefällt, zweimal mit jeweils 180 kg Methanol gewaschen und anschließend getrocknet.
Ausbeute: 25,8 kg
J-Wert : 54 $cm^3/g$

Beispiel 1.5

Analog 1.4 mit 30 kg 2,6-Dimethylphenol (100 Mol-%) in 30 kg Toluol.
Ausbeute: 25,4 kg
J-Wert : 53 $cm^3/g$

2. Herstellung von Formmassen

Die Herstellung der Formmassen erfolgte auf einem Leistritz-Doppelschneckenextruder mit der Typenbezeichnung LSM 30.34. Die granulierten und getrockneten Produkte werden zu Normkörpern verspritzt und anschließend geprüft. Die jeweiligen Prüfergebnisse können der Tabelle entnommen werden.

Beispiel 2.1

5,4 kg Polyphenylenether gemäß Beispiel 1.4 werden mit 0,6 kg VESTENAMER® 8012 (Polyoctenylen der Firma Hüls AG, D-4370 Marl) bei 290 °C in der Schmelze gemischt. Der extrudierte Strang wird im Wasserbad gekühlt, anschließend granuliert und getrocknet.

Vergleichsbeispiel A

Analog Beispiel 2.1 mit 5,4 kg Polyphenylenether gemäß Beispiel 1.5.

Beispiel 2.2

5,4 kg Polyphenylenether gemäß Beispiel 1.1 werden mit 0,6 kg BUNA® AP 437 (Ethylen-Propylen-Dien-Terpolymer der Firma Hüls AG, D-4370 Marl) bei 280 °C in der Schmelze gemischt.

Vergleichsbeispiel B

Analog Beispiel 2.2 mit 5,4 kg Polyphenylenether gemäß Beispiel 1.5.

Beispiel 2.3

2,0 kg Polyphenylenether gemäß Beispiel 1.1 werden mit 3,0 kg Polyamid 12 ($Eta_{rel}$ = 1,91) bei 290 °C in der Schmelze gemischt.

Beispiel 2.4

Analog Beispiel 2.3 mit 2,0 kg Polyphenylenether gemäß Beispiel 1.2.

Beispiel 2.5

Analog Beispiel 2.3 mit 2,0 kg Polyphenylenether gemäß Beispiel 1.3.

Vergleichsbeispiel C

Analog Beispiel 2.3 mit 2,0 kg Polyphenylenether gemäß Beispiel 1.5.

Beispiel 2.6

3,96 kg Polyphenylenether gemäß Beispiel 1.1 werden mit 0,040 kg Maleinsäureanhydrid trocken vorgemischt und bei 280 °C extrudiert, anschließend granuliert und getrocknet.

2,0 kg des so hergestellten funktionalisierten Polyphenylenethers werden mit 3,0 kg Polyamid 12 ($Eta_{rel}$ = 1,91) bei 290 °C in der Schmelze gemischt.

Vergleichsbeispiel D

Analog Beispiel 2.6 mit 3,96 kg Polyphenylenether gemäß Beispiel 1.5.

Beispiel 2.7

Entsprechend Beispiel 2.1 wird eine Vorformmasse aus 4 5 kg Polyphenylenether gemäß Beispiel 1.1 und 0,5 kg VESTENAMER® 8012 herge stellt.

3,96 kg dieser Vorformmasse werden mit 0,040 kg Maleinsäureanhydrid gemischt und im Doppelschneckenextruder aufgeschmolzen, während im 5. Schuß 6,0 kg Polyamid 12 als Granulat zugegeben und bei 290 °C eingemischt wird. Der extrudierte Strang wird im Wasserbad gekühlt, anschließend granuliert und getrocknet.

Vergleichsbeispiel E

Analog Beispiel 2.7 mit 4,5 kg Polyphenylenether gemäß Beispiel 1.5.

Wie aus der Tabelle zu erkennen ist, wird in allen Fällen bei Verwendung des erfindungsgemäß modifizierten Polyphenylenethers eine verbesserte Kerbschlagzähigkeit erhalten. Auch die Reißdehnung ist regelmäßig größer als bei den entsprechenden Formmassen auf Basis von unmodifiziertem Polyphenylenether, was auf eine verbesserte Phasenanbindung hinweist. Überraschenderweise wird dadurch aber die Fließfähigkeit in den meisten Fällen nicht beeinträchtigt.

Tabelle

| Beispiel | Polyphenylenether (Gew.-%) | Polyoctenylen (Gew.-%) | EPDM-Kautschuk (Gew.-%) | MSA[a)] (Gew.-%) | Polyamid 12 (Gew.-%) | Kerbschlag n. DIN 53 453 ($kJ/m^2$) bei 23 °C | Reißdehnung $\epsilon_R$ in % |
|---|---|---|---|---|---|---|---|
| 2.1 | 90 | 10 | - | - | - | 36 | *) |
| A | 90 | 10 | - | - | - | 29 | *) |
| 2.2 | 90 | - | 10 | - | - | 18 | *) |
| B | 90 | - | 10 | - | - | 13,5 | *) |
| 2.3 | 40 | - | - | - | 60 | 6 | 34 |
| 2.4 | 40 | - | - | - | 60 | 6 | 48 |
| 2.5 | 40 | - | - | - | 60 | 7 | 56 |
| C | 40 | - | - | - | 60 | 4 | 5 |
| 2.6 | 39,6 | - | - | 0,4 | 60 | 9 | 91 |
| D | 39,6 | - | - | 0,4 | 60 | 7 | 63 |
| 2.7 | 35,64 | 3,96 | - | 0,4 | 60 | 0. Br. [b)] | 151 |
| E | 35,64 | 3,96 | - | 0,4 | 60 | 30 | 102 |

[a)] Maleinsäureanhydrid;
[b)] ohne Bruch;
*) nicht bestimmt

## Ansprüche

1. Polyphenylenether enthaltende thermoplastische Formmassen, dadurch gekennzeichnet, daß die zur Herstellung dieser Formmassen eingesetzten Polyphenylenether hergestellt werden durch oxidative Kupplung von Phenolen der allgemeinen Formel I,

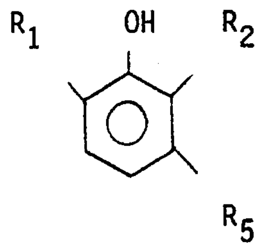

I

wobei $R_1$ und $R_2$ gleich Alkyl mit 1 bis 6 C-Atomen oder Phenyl beziehungsweise $R_1$ gleich tert.-Butyl und $R_2$ gleich H sowie $R_5$ gleich Alkyl mit 1 bis 6 C-Atomen oder bevorzugt H ist, mit Comonomeren der allgemeinen Formel II,

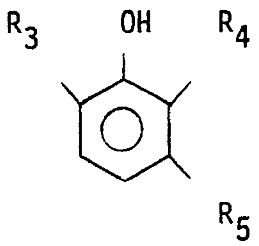

II

wobei $R_3$ gleich $R_1$ oder ggf. substituiertes Benzyl und $R_4$ gleich ggf. substituiertes Benzyl ist, und die ggf. substituierte Benzylgruppe 7 bis 12 C-Atome besitzt.

2. Formmassen gemäß Anspruch 1,
dadurch gekennzeichnet,
daß das Comonomer II im Bereich von 0,2 bis 20 Mol-% eingesetzt wird.

3. Formmassen gemäß Anspruch 1 und 2,
dadurch gekennzeichnet,
daß $R_1$ und $R_2$ gleich $CH_3$ sind.

4. Formmassen gemäß den Ansprüchen 1 bis 3,
dadurch gekennzeichnet,
daß $R_5$ gleich H ist.

5. Formmassen gemäß den Ansprüchen 1 bis 4,
dadurch gekennzeichnet,
daß sie neben den Polyphenylenethern Polymere enthalten, welche die Schlagzähigkeit verbessern.

6. Formmassen gemäß den Ansprüchen 1 bis 5,
dadurch gekennzeichnet,
daß sie neben dem Polyphenylenether Polyamide enthalten.

7. Formmassen gemäß den Ansprüchen 1 bis 6,
dadurch gekennzeichnet,
daß die Polyphenylenether und/oder die Polymeren, die die Schlagzähigkeit verbessern, nach Methoden des Standes der Technik funktionalisiert sind.

8. Formkörper, hergestellt aus den Formmassen gemäß den Ansprüchen 1 bis 7.